# EUROPEAN PATENT SPECIFICATION

(11) **EP 4 286 610 B1**
(45) Date of publication and mention of the grant of the patent: **04.03.2026**
(21) Application number: 22864628.7
(22) Date of filing: 31.08.2022
(51) Int. Cl.: E02F 9/26, G09G 5/39, G09G 5/00

(54) **WORK MACHINE**
ARBEITSMASCHINE
ENGIN DE CHANTIER

(30) Priority: 31.08.2021 JP 2021141249
(43) Date of publication of application: 06.12.2023
(73) Proprietor: Hitachi Construction Machinery Co., Ltd., Tokyo 110-0015 (JP)
(72) Inventor: YOSHIDA Shinichirou, Tsuchiura-shi, Ibaraki 300-0013 (JP); NAKAMURA Keiichirou, Tsuchiura-shi, Ibaraki 300-0013 (JP); SASAZAKI Shinichi, Tsuchiura-shi, Ibaraki 300-0013 (JP)
(74) Representative: Manitz Finsterwald Patent- und Rechtsanwaltspartnerschaft mbB
(86) International application number: PCT/JP2022/032773
(87) International publication number: WO 2023/033046

(56) References cited:
- WO-A1-02/44480
- WO-A1-2019/187519
- JP-A- 2002 332 666
- JP-A- 2002 332 666
- JP-B2- 5 002 515
- JP-B2- 5 548 880
- US-A1- 2018 352 162

## Description

### TECHNICAL FIELD

The present invention relates to a work machine in which an operator's cab is provided with a display device for displaying various information.

### BACKGROUND ART

In an operator's cab of a work machine such as a hydraulic excavator, a display device, for example, a liquid crystal monitor is provided to notify an operator of an operation state of the work machine. For displaying basic information such as a remaining amount of fuel, a temperature of cooling water, and an attitude of a working device, and also information of functions such as failure diagnosis and monitoring of surroundings, the display device of the work machine needs to acquire image data for displaying various information and image data for displaying a user interface, and this may consume the capacity of a memory for storing the image data.

Accordingly, for example, in a display device of a work machine according to Patent Literature 1, for image data having an outline portion serving as the boundary with the background of a screen to be displayed on a display section and a main body portion located inside the outline portion, the color of the main body portion is set to be the same as or similar to the color of the background of the screen and also the color of the outline portion is set to be different from the color of the background, so as to reduce the usage of the capacity of a memory.

Furthermore, for example, a display device of a work machine according to Patent Literature 2 includes a first display control device for displaying vehicle body basic information of the work machine and a second display control device for displaying information which is used less than the vehicle body basic information so as to respond to multi-functionalized display with the limited capacity of a memory.

### CITATION LIST

### PATENT LITERATURE

Patent Literature 1: JP-B-5548880
Patent Literature 2: JP-B-5002515

### SUMMARY OF INVENTION

### TECHNICAL PROBLEM

However, the display device according to Patent Literature 1 is directed to the image data having the outline portion, and thus in the cases of image data having no outline portion, for each of the cases, creates image data corresponding to the color of a background of a screen, which makes difficult to reduce the usage of the capacity of the memory. In the case of the display device according to Patent Literature 2, mounting the two display control devices may result in increase in the cost.

Therefore, an object of the present invention is to provide a work machine provided with a display device capable of reducing the usage of the capacity of a memory without increasing the cost while realizing display using image data in which the sharpness when being display is ensured.

### SOLUTION TO PROBLEM

In order to achieve the object above, the present invention provides a work machine comprising: a display device configured to display a plurality of work mode screens used during work and a plurality of service mode screens used during maintenance; and a controller configured to control display of the display device, wherein the controller is further configured to store: first image data to be displayed on the plurality of work mode screens; and second image data to be displayed on the plurality of service mode screens, and the second image data includes specific image data having a quality set to be different from a quality of the first image data.

### ADVANTAGEOUS EFFECTS OF INVENTION

According to the present invention, it is possible to reduce the usage of the capacity of a memory without increasing the cost while using image data in which the sharpness is ensured for displaying in a display device. The problems, configurations, and advantageous effects other than those described above will be clarified by explanation of the embodiments below.

### BRIEF DESCRIPTION OF DRAWINGS

[FIG. 1] FIG. 1 is a side view of appearance, which illustrates an example of a structure of a hydraulic excavator according to each embodiment of the present invention.
[FIG. 2] FIG. 2 illustrates an example of transition of a screen to be displayed on a display section of a monitor.
[FIG. 3] FIG. 3 illustrates examples of work mode screens.
[FIG. 4] FIG. 4 illustrates examples of service mode screens.
[FIG. 5] FIG. 5 is a functional block diagram illustrating function of a controller according to a first embodiment.
[FIG. 6] FIG. 6 illustrates a flowchart of a flow of processing executed in the controller according to the first embodiment.
[FIG. 7] FIG. 7 illustrates a flowchart of a flow of processing executed in a controller according to a second embodiment.

### DESCRIPTION OF EMBODIMENTS

Hereinafter, a hydraulic crawler excavator will be described as an aspect of a work machine according to each embodiment of the present invention.

### <Overall structure of hydraulic excavator 1>

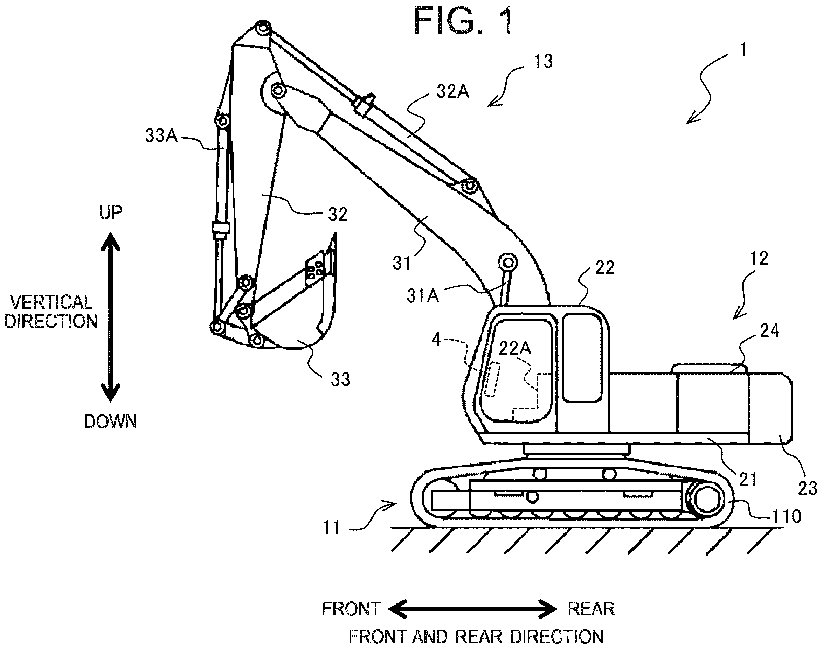

Firstly, an overall structure of a hydraulic excavator 1 will be described with reference to FIG. 1.

FIG. 1 is a side view of appearance, which illustrates an example of a structure of the hydraulic excavator 1 according to each embodiment of the present invention.

The hydraulic excavator 1 includes a crawler undercarriage 11 capable of self-propelling, an upperstructure 12 provided so as to swing above the undercarriage 11, and a working device 13 attached to a front portion of the upperstructure 12 to perform operations such as excavation and leveling.

The undercarriage 11 includes a pair of crawlers 110 extending in the front and rear direction of a vehicle body, which is provided on the left and right sides one by one, and causes the pair of crawlers 110 to rotate by the driving force of the pair of traveling motors (not illustrated) while making them in contact with the ground, so as to cause the vehicle body to move. The pair of traveling motors is mounted on the left and right sides of the undercarriage 11 so as to correspond to the left and right crawlers 110, respectively, and they are driven independently from each other so as to make the left and right crawlers 110 rotate independently in the forward and reverse directions. Note that FIG. 1 illustrates only the left crawler 110 of the pair of left and right crawlers 110.

The upperstructure 12 includes a revolving frame 21 serving as a base, an operator's cab 22 allowing an operator to get in, a counterweight 23 that maintains a balance with the working device 13 so as to prevent the hydraulic excavator 1 from tilting, and a machine room 24 that houses equipment necessary for driving the hydraulic excavator 1 therein.

On the revolving frame 21, the operator's cab 22 is placed on the left side of the front, the counterweight 23 is placed on the rear end, and the machine room 24 is placed between the operator's cab 22 and the counterweight 23. In the operator's cab 22, an operator's seat 22A on which the operator is sit, and a monitor 4 arranged in front of the operator's seat 22A and serving as a display device for displaying an operation state of the hydraulic excavator 1 and the like are installed. Note that FIG. 1 illustrates the operator's seat 22A and the monitor 4 using broken lines.

The working device 13 includes a boom 31 rotatably attached to the revolving frame 21 at one end, a boom cylinder 31A for driving the boom 31, an arm 32 rotatably attached to the other end of the boom 31, an arm cylinder 32A for driving the arm 32, a bucket 33 rotatably attached to the tip of the arm 32, and a bucket cylinder 33A for driving the bucket 33.

The boom cylinder 31A connects the revolving frame 21 and the boom 31, in which a rod extends and contracts to cause the boom 31 to rotate (raised and lowered) in the vertical direction with respect to the upperstructure 12. The arm cylinder 32A connects the boom 31 and the arm 32, in which a rod extends and contracts to cause the arm 32 to rotate in the front and rear direction with respect to the boom 31. The bucket cylinder 33A connects the arm 32 and the bucket 33, in which a rod extends and contracts to cause the bucket 33 to rotate in the front and rear direction with respect to the arm 32.

The bucket 33 scoops up objects, such as earth and sand, and dumps them at a predetermined position. Note that the bucket 33 can be replaced with various attachments such as a grapple for grasping woods, rocks, wastes, and the like, and a breaker for excavating rocks. This allows the hydraulic excavator 1 to perform various operations including excavation, crushing, and the like using an attachment suitable for the details of operations.

### <Configuration of monitor 4>

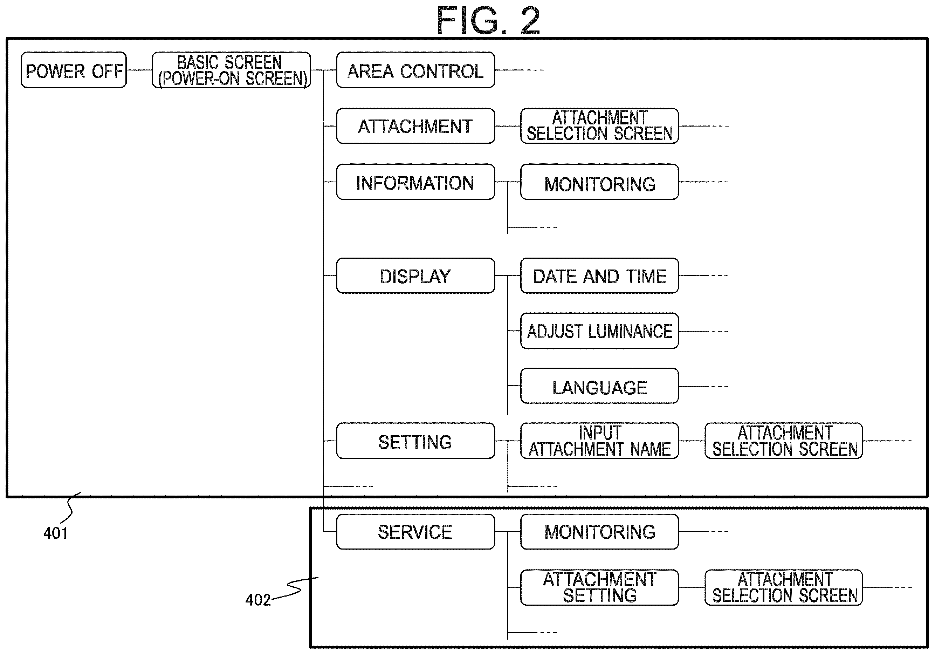

Next, a configuration of the monitor 4 will be described with reference to FIG. 2 to FIG. 4.

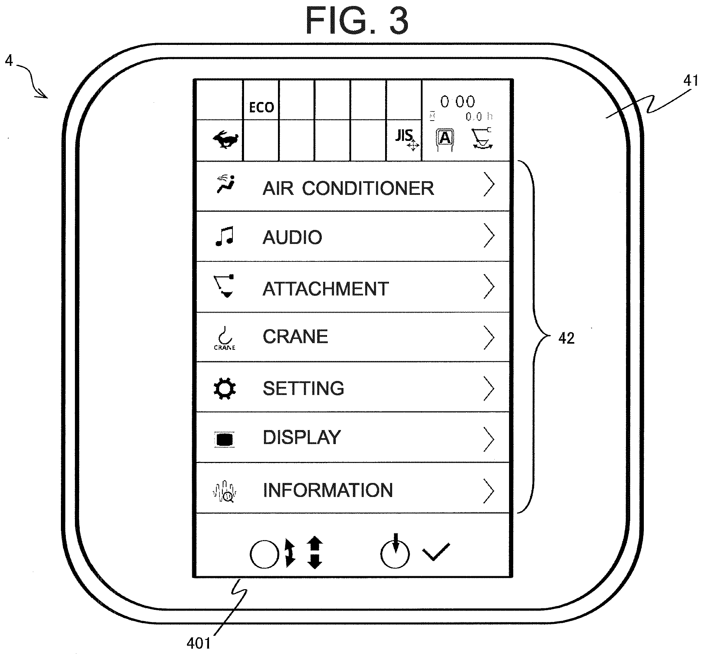

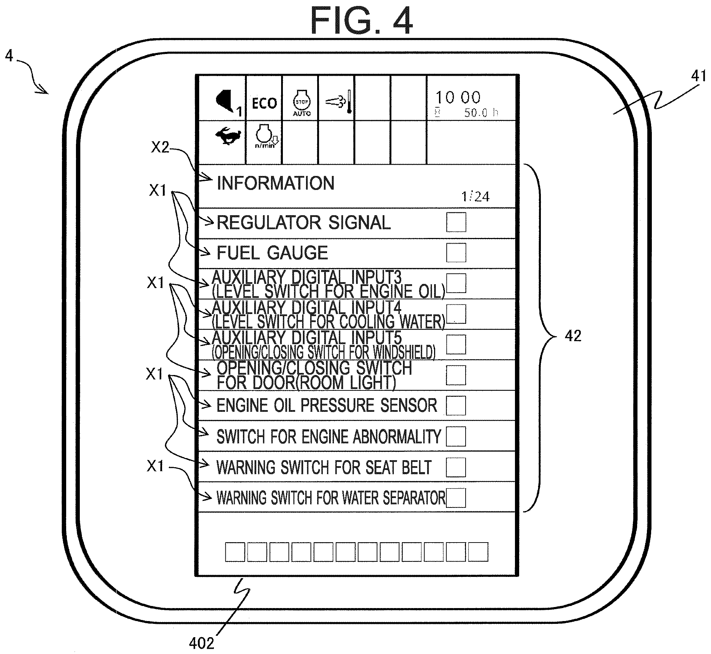

FIG. 2 illustrates an example of transition of a screen to be displayed on a display section 41 of the monitor 4. FIG. 3 illustrates examples of work mode screens 401. FIG. 4 illustrates examples of service mode screens 402.

The monitor 4 displays basic information relating to the hydraulic excavator 1 such as the remaining amount of fuel, the temperature of cooling water, an attitude of the working device, and values of each sensor, and various types of information such as information about functions such as failure diagnosis of equipment and systems mounted on the hydraulic excavator 1 and monitoring of the surroundings of the hydraulic excavator 1, and notifies an operator of the state of the hydraulic excavator 1.

The monitor 4 includes a display section 41 that displays screens showing various types of information, and an operation section 42 that switches the screens and changes various settings. In FIG. 3 and FIG. 4, the monitor 4 is a touch panel monitor, and is configured with a combination of a liquid crystal panel having functions of the display section 41 and a touch pad having functions of the operation section 42.

For example, in FIG. 3, among the screens being displayed on the display section 41, the areas in which "Air Conditioner", "Audio", "Attachment", "Crane", "Setting", "Display", and "Information" are displayed, serve as the operation section 42, respectively. Specifically, for example, when an operator touches the area in which "Audio" is displayed, the display section 41 is switched to a volume adjustment screen for adjusting the volume, which then allows the operator to touch an icon for turning the volume up or down on the volume adjustment screen to adjust the volume.

Note that the monitor 4 does not necessarily have to be a touch panel monitor, and may be configured such that the hardware configurations of the display section 41 and operation section 42 are different from each other. For example, a plurality of operation buttons or the like may be provided as the operation section 42 on the left and right sides or the upper and lower sides of the display section 41.

As illustrated in FIG. 2, the display section 41 of the monitor 4 displays mainly two types of screens, which are a plurality of work mode screens 401 used when an operator manipulates the hydraulic excavator 1 (for working) and a plurality of service mode screens 402 used when a service person performs maintenance of the hydraulic excavator 1 (for providing service).

Each of the plurality of work mode screens 401 is a screen necessary when an operator manipulates the hydraulic excavator 1 (for working). On the other hand, each of the plurality of service mode screens 402 is a screen necessary when a service person works for adjustment (maintenance) of the hydraulic excavator 1 (for providing service), which is, generally, not used by the operator.

Firstly, when an operator turns on the monitor 4 from an OFF state, the display section 41 displays a basic screen that is one of the plurality of work mode screens 401. On the basic screen, menus such as "Area Control", "Attachment", "Information", "Display", "Setting", and "Service" are being displayed. FIG. 3 illustrates an example of the basic screen as one of the work mode screens 401.

Touching and selecting the area in which "Attachment" is displayed in the basic screen causes the display section 41 to display an attachment selection screen for selecting an attachment. Touching and selecting the area in which "Information" is displayed in the basic screen causes the display section 41 to display an information menu screen such as "Monitoring".

Touching and selecting the area in which "Display" is displayed in the basic screen causes the display section 41 to display setting menu screens such as "Date and Time", "Adjust Brightness", and "Language". Touching and selecting the area in which "Setting" is displayed in the basic screen causes the display section 41 to display an attachment name input screen for inputting the name of an attachment. Then, inputting the name of an attachment in the attachment name input screen causes the display section 41 to display an attachment selection screen for selecting the attachment corresponding to the name of the attachment as input.

On the other hand, touching and selecting the area in which "Service" is displayed in the basic screen causes the display section 41 to display service menu screens such as "Monitoring" and "Attachment Setting". Then, touching and selecting the area in which "Attachment Setting" is displayed in the service menu screen causes the display section 41 to display an attachment selection screen for selecting an attachment.

Thus, selecting "Service" in the basic screen causes transition to the service mode screens 402 (FIG. 4 illustrates examples thereof), and selecting either of the menus other than "Service" in the basic screen causes transition to the work mode screens 401 (FIG. 3 illustrates examples thereof).

The transition of the screens to be displayed on the display section 41 is controlled by a controller 6. That is, the controller 6 controls the screens and image data to be output to the display section 41 in accordance with an operation on the operation section 42 by the operator. As illustrated in FIG. 3 and FIG. 4, the image data to be displayed on the plurality of work mode screens 401 and plurality of service mode screens 402, respectively, includes, for example, character data such as "Attachment" and "Setting", and figure data about, for example, icons.

The controller 6 stores, in a memory (storage section 64 which will be described later), the image data to be displayed on the plurality of work mode screens 401 as the first image data, and the image data to be displayed on the plurality of service mode screens 402 as the second image data.

Here, comparing FIG. 3 with FIG. 4, it is found that the character "Information" displayed at a lower position in the work mode screens 401 is also displayed at an upper position in the service mode screens 402. Thus, in the second image data, not only specific image data X1 (for example, character data such as "Regulator Signal", "Fuel Gauge", and "Switch for Engine Abnormality" illustrated in FIG. 4) which is image data to be displayed only on the plurality of service mode screens 402, but also common image data X2 to be displayed on at least one of the plurality of work mode screens 401 are also included.

The plurality of work mode screens 401 is generally used by an operator, and thus, the first image data to be displayed on the plurality of work mode screens 401 preferably has a high quality in which the sharpness when being displayed is secured.

On the other hand, among the pieces of second image data, the specific image data X1 to be displayed only on the plurality of service mode screens 402 used by a service person is set to have the quality lower than the quality of the first image data. Specifically, the quality of the specific image data X1 is made lower than the quality of the first image data by, for example, reducing the resolution, interlaced scanning, and eliminating anti-aliasing. Note that the quality of the specific image data X1 may be lower0068
ed by all of the approaches of reducing the resolution, interlaced scanning, and eliminating anti-aliasing, or by any one of the approaches.

Note that "resolution" refers to the number of pixels in the vertical direction or the lateral direction on the screen of the monitor 4. "Interlaced scanning" refers to the technique of transmitting scanning lines every other scanning line and dividing one image into two parts and displaying them. "Anti-aliasing" refers to the processing of reducing jagged edges occurring in a curved line or an oblique line and arranging an intermediate color around a boundary line. Herein, a "high-quality image" refers to an image having a high resolution in which the sharpness is secured, or an image after being processed by interlaced scanning or anti-aliasing.

Thus, setting the quality of the specific image data X1 lower than the quality of the first image data enables reduction in the usage of the capacity of the memory of the controller 6. This make it unnecessary to separately prepare memories, which are a memory for storing the first image data and a memory for storing the second image data, and thus enables the capacity of the memory of the controller 6 to be secured without increasing the cost.

Note that, among the pieces of second image data, the common image data X2 is set to have the same quality as the quality of the first image data. Thus, for the same image data to be displayed in both the work mode screens 401 and the service mode screens 402, the controller 6 does not have to store two pieces of, low quality and high quality image data, in the memory.

In particular, the hydraulic excavator 1 has various functions more than other work machines, for example, an area limitation function (Area Control illustrated in FIG. 2) for limiting an operation area of the working device 13 and an optional function used in foundation work. This increases the volume of information to be displayed on the monitor 4 and thus tends to consume the capacity of the memory of the controller 6. Therefore, reducing the usage of the capacity of the memory in advance as described above enables the memory to work without being modified even if a wide variety of functions is added.

### (First Embodiment)

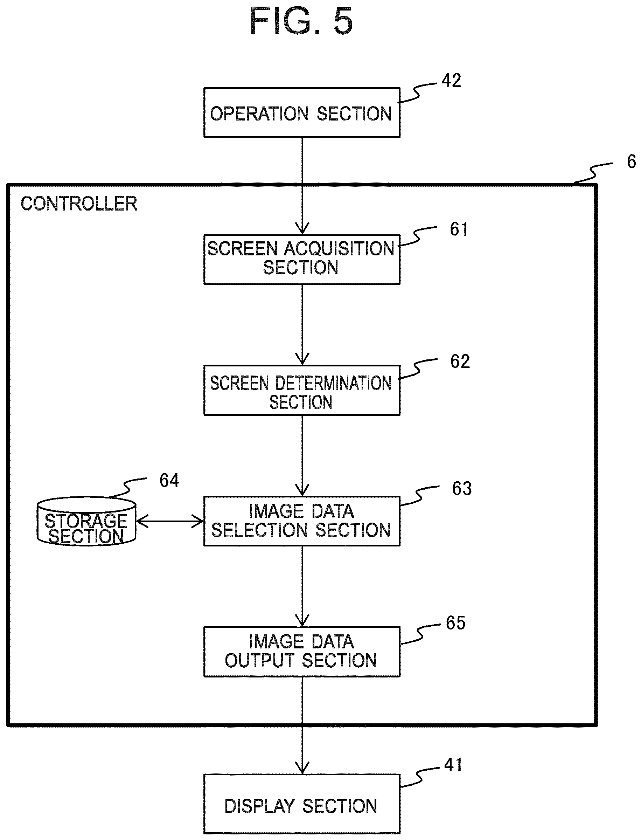

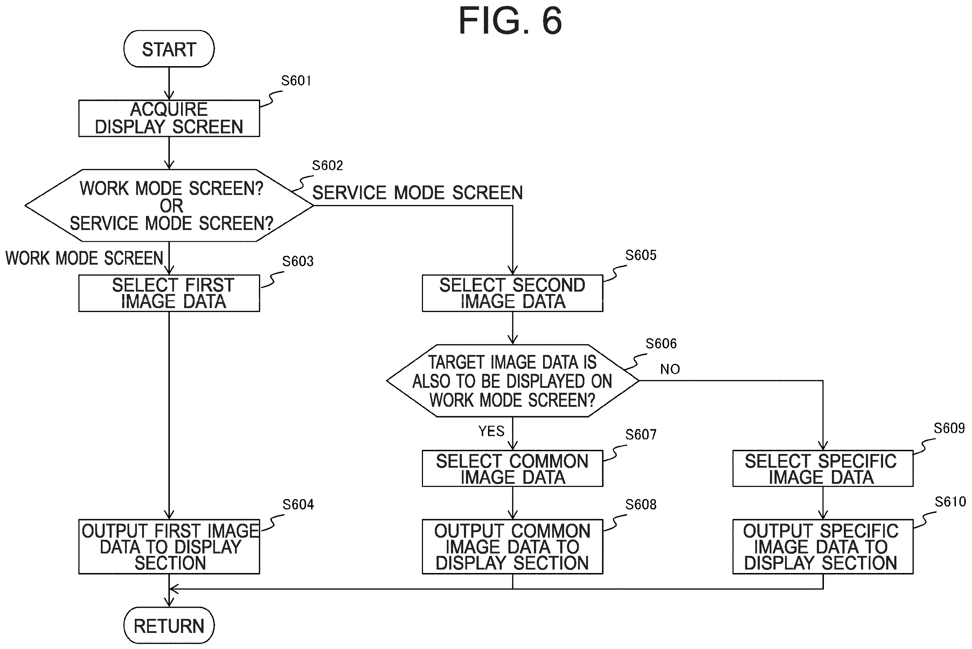

Next, referring to FIG. 5 and FIG. 6, a configuration of the controller 6 according to the first embodiment of the present invention and the processing executed in the controller 6 will be described.

FIG. 5 is a functional block diagram illustrating the functions of the controller 6 according to the first embodiment. FIG. 6 illustrates a flowchart of a flow of the processing executed in the controller 6 according to the first embodiment.

The controller 6 is configured such that a CPU, a RAM, a ROM, an input I/F, and an output I/F are connected to each other via a bus. The operation section 42 of the monitor 4 is connected to the input I/F, and the display section 41 of the monitor 4 is connected to the output I/F.

In this hardware configuration, the CPU reads out a control program (software) stored in a recording medium such as the ROM or an optical disc, and loads and executes the control program on the RAM, whereby the control program and the hardware collaborate to implement the functions of the controller 6.

In the present embodiment, the controller 6 is described as a computer configured by a combination of software and hardware. However, the controller 6 is not limited thereto, and as one of the examples of configurations of other computers, an integrated circuit for implementing the functions of the control program executed by on the side of the hydraulic excavator 1 may be used.

As illustrated in FIG. 5, the controller 6 includes a screen acquisition section 61, a screen determination section 62, an image data selection section 63, a storage section 64, and an image data output section 65.

The screen acquisition section 61 acquires data about a screen which will be displayed on the display section 41 (screen to be displayed) in response to an operation of the operation section 42. The screen determination section 62 determines which of the work mode screens 401 and the service mode screens 402 the screen to be displayed which has been acquired by the screen acquisition section 61 is.

The image data selection section 63 reads out the image data stored in the storage section 64 based on the result of determination by the screen determination section 62.

Specifically, the image data selection section 63 selects the first image data when the screen determination section 62 determines that the screen to be displayed is one of the work mode screens 401, and selects the second image data when the screen determination section 62 determines that the screen to be displayed is one of the service mode screens 402. Furthermore, when selecting the second image data, the image data selection section 63 determines which of the specific image data X1 and the common image data X2 the image data to be displayed is.

The storage section 64 is a memory of the controller 6. In the storage section 64, the preset first image data and second image data are stored, respectively. Note that, for the second image data, the specific image data X1 and the common image data X2 are distinguished and stored in the storage section 64, respectively.

The image data output section 65 outputs the image data selected by the image data selection section 63 to the display section 41.

As illustrated in FIG. 6, firstly, in the controller 6, the screen acquisition section 61 acquires the data about the screen to be displayed on the display section 41 based on the operation signal output from the operation section 42 (step S601).

Subsequently, the screen determination section 62 determines whether the screen to be displayed on the display section 41 is one of the work mode screens 401 or one of the service mode screens 402 based on the data about the screen to be displayed which has been acquired in step S601 (step S602).

When it is determined in step S602 that the screen to be displayed on the display section 41 is one of the work mode screens 401 (step S602/ WORK MODE SCREEN), the image data selection section 63 selects the first image data (step S603). Then, the image data output section 65 outputs the first image data selected in step S603 to the display section 41 (step S604).

On the other hand, when it is determined in step S602 that the screen to be displayed on the display section 41 is one of the service mode screens 402 (step S602/ SERVICE MODE SCREEN), the image data selection section 63 selects the second image data (step S605). Then, the image data selection section 63 determines whether the image data to be displayed is also to be displayed in the work mode screens 401 (step S606).

When it is determined in step S606 that the image data to be displayed is also to be displayed in the work mode screens 401 (step S606/YES), the image data selection section 63 selects the common image data X2 (step S607). Then, the image data output section 65 outputs the common image data X2 selected in step S607 to the display section 41 (step S608).

On the other hand, in step S606, when it is determined that the image data to be displayed is not to be displayed in the work mode screens 401 (step S606/NO), the image data selection section 63 selects the specific image data X1 (step S609). Then, the image data output section 65 outputs the specific image data X1 selected in step S609 to the display section 41 (step S610).

After the image data output section 65 outputs each image data to the display section 41 (step S604, step S608, step S610), the controller 6 returns to step S601 and repeats the processing.

As described above, the controller 6 sets and stores image data having different qualities in advance in the storage section 64 which is a memory, reads out the image data corresponding to the type of a screen to be displayed (one of the work mode screens 401 or one of the service mode screens 402) from the storage section 64, and outputs the image data to the display section 41. This enables reduction in the usage of the capacity of the memory without increasing the cost while using the first image data in which the sharpness is secured for display to the operator.

### <Second Embodiment>

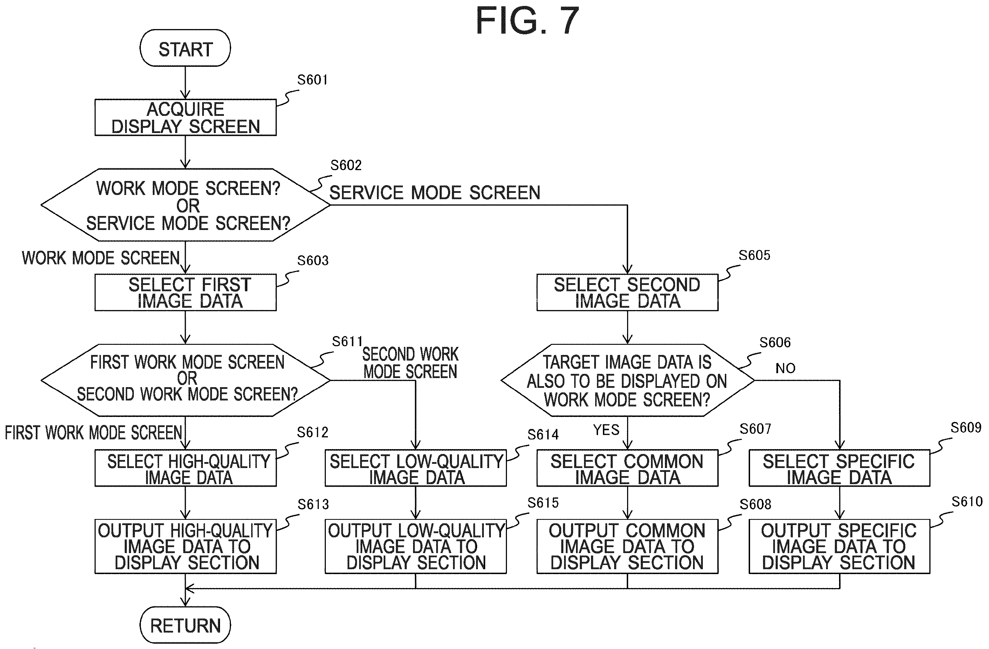

Next, referring to FIG. 7, the processing executed in the controller 6 according to a second embodiment of the present invention will be described. The components common to those described for the controller 6 according to the first embodiment are provided with the same reference signs, and explanation therefor will be omitted.

FIG. 7 illustrates a flowchart of a flow of the processing executed in the controller 6 according to the second embodiment.

In the controller 6 according to the present embodiment, the processing for further reducing the usage of the capacity of the memory in the controller 6 in case that the usage of the capacity of the memory is still too large even if the processing according to the first embodiment has been performed in the controller 6.

The plurality of work mode screens 401 includes a first work mode screen 401A that is frequently used such as a basic screen (see FIG. 2 and FIG. 3), and a second work mode screen 401B that is rarely used such as a screen for adjusting the luminance of the display or a screen for switching languages (see FIG. 2), in other words, a screen less frequently used than the first work mode screen 401A.

In the present embodiment, the first image data to be displayed on the first work mode screen 401A is set as image data having a high quality (high-quality image data) in which the sharpness when being displayed is secured, and the first image data to be displayed on the second work mode screen 401B is set as image data having a quality lower than the quality of the first image data to be displayed on the first work mode screen 401A (low-quality image data).

Note that, in the same manner as the specific image data X1, the quality of the low-quality image data is also lowered by using the approaches such as reduction in resolution, interlaced scanning, and elimination of anti-aliasing.

As illustrated in FIG. 7, in the controller 6 according to the present embodiment, when the image data selection section 63 selects the first image data (step S603), subsequently, the screen determination section 62 determines which of the first work mode screen 401A and the second work mode screen 401B the screen to be displayed which has been determined in step S602 as falling within the work mode screens 401 is (step S611).

When it is determined in step S611 that the screen to be displayed is the first work mode screen 401A (step S611/ FIRST WORK MODE SCREEN), the image data selection section 63 selects the high-quality image data (step S612). Then, the image data output section 65 outputs the high-quality image data selected in step S612 to the display section 41 (step S613).

On the other hand, when it is determined in step S611 that the screen to be displayed is the second work mode screen 401B (step S611/ SECOND WORK MODE SCREEN), the image data selection section 63 selects the low-quality image data (step S614). Then, the image data output section 65 outputs the low-quality image data selected in step S614 to the display section 41 (step S615).

Also in the present embodiment, after the image data output section 65 outputs each image data to the display section 41 (step S608, step S610, step S613, step S615), the controller 6 returns to step S601 and repeats the processing.

As described above, in case that the usage of the capacity of the memory of the controller 6 is still too large even after reducing the quality of the second image data to be displayed in the service mode screens 402, reducing the quality of the first image data, among the pieces of the first image data to be displayed in the work mode screens 401, which is to be displayed on the less frequently used second work mode screen 401B enables further reduction in the usage of the capacity of the memory.

Hereinabove, embodiments of the present invention have been described. The present invention is not limited to the embodiments described above, and includes various modifications. For example, the embodiments described above have been described in detail for the purpose of making the present invention easy to be understood, but are not necessarily limited to those having all the configurations described above. In addition, a part of the configuration of the present embodiments can be replaced with a configuration of other embodiments, and a configuration of other embodiments can be added to the configuration of the present embodiments. Furthermore, for a part of the configuration of the present embodiment, other configurations may be added, or deletion or replacement may be performed.

For example, in the embodiments above, the hydraulic excavator 1 has been described as an aspect of a work machine, however, the present invention is not limited thereto. For example, the present invention can be applied to other work machines such as wheel loaders and dump trucks.

### REFERENCE SIGNS LIST

1: hydraulic excavator (work machine)
4: monitor (display device)
6: controller
401: work mode screen
401A: first work mode screen
401B: second work mode screen
402: service mode screen
X1: specific image data
X2: common image data

## Claims

1. A work machine (1) comprising:
a display device (4) configured to display a plurality of work mode screens (401, 401A, 401B) used during work and a plurality of service mode screens (402) used during maintenance; and
a controller (6) configured to control display of the display device (4), **characterised in that**
the controller (6) is further configured to store:
first image data to be displayed on the plurality of work mode screens (401, 401A, 401B); and
second image data to be displayed on the plurality of service mode screens (402), and
the second image data includes specific image data (X1) having a quality set to be different from a quality of the first image data.

2. The work machine (1) according to claim 1, wherein
a quality of the specific image data (X1) is set to be lower than the quality of the first image data.

3. The work machine (1) according to claim 1, wherein
the second image data includes common image data (X2) to be displayed on at least any of the plurality of work mode screens (401, 401A, 401B), and
a quality of the common image data (X2) is set to be the same as the quality of the first image data.

4. The work machine (1) according to claim 1, wherein
the plurality of work mode screens (401, 401A, 401B) includes:
a first work mode screen (401A); and
a second work mode screen (401B) that is less frequently used than the first work mode screen (401A), and
a quality of the first image data to be displayed on the second work mode screen (401B) is set to be lower than the quality of the first image data to be displayed on the first work mode screen (401A).

## Patentansprüche

1. Arbeitsmaschine (1), umfassend:
eine Anzeigevorrichtung (4), die konfiguriert ist, um eine Vielzahl von Arbeitsmodusbildschirmen (401, 401A, 401B), die während der Arbeit verwendet werden, und eine Vielzahl von Wartungsmodusbildschirmen (402), die während der Wartung verwendet werden, anzuzeigen; und
einen Controller (6), der konfiguriert ist, um die Anzeige der Anzeigevorrichtung (4) zu steuern, **dadurch gekennzeichnet, dass**
der Controller (6) ferner konfiguriert ist, um zu speichern:
erste Bilddaten, die auf der Vielzahl von Arbeitsmodusbildschirmen (401, 401A, 401B) angezeigt werden sollen; und
zweite Bilddaten, die auf der Vielzahl von Wartungsmodusbildschirmen (402) angezeigt werden sollen, und
die zweiten Bilddaten spezifische Bilddaten (X1) enthalten, die eine Qualität aufweisen, die so eingestellt ist, dass sie sich von einer Qualität der ersten Bilddaten unterscheidet.

2. Arbeitsmaschine (1) nach Anspruch 1, wobei eine Qualität der spezifischen Bilddaten (X1) so eingestellt ist, dass sie niedriger als die Qualität der ersten Bilddaten ist.

3. Arbeitsmaschine (1) nach Anspruch 1, wobei
die zweiten Bilddaten gemeinsame Bilddaten (X2) enthalten, die auf mindestens einem der Vielzahl von Arbeitsmodusbildschirmen (401, 401A, 401B) angezeigt werden sollen, und
eine Qualität der gemeinsamen Bilddaten (X2) so eingestellt ist, dass sie die gleiche wie die Qualität der ersten Bilddaten ist.

4. Arbeitsmaschine (1) nach Anspruch 1, wobei
die Vielzahl von Arbeitsmodusbildschirmen (401, 401A, 401B) enthält:
einen ersten Arbeitsmodusbildschirm (401A); und
einen zweiten Arbeitsmodusbildschirm (401B), der weniger häufig verwendet wird als der erste Arbeitsmodusbildschirm (401A), und
eine Qualität der ersten Bilddaten, die auf dem zweiten Arbeitsmodusbildschirm (401B) angezeigt werden sollen, so eingestellt ist, dass sie niedriger als die Qualität der ersten Bilddaten ist, die auf dem ersten Arbeitsmodusbildschirm (401A) angezeigt werden sollen.

## Revendications

1. Engin de chantier (1) comprenant :
un dispositif d'affichage (4) configuré pour afficher une pluralité d'écrans de mode de travail (401, 401A, 401B) utilisés pendant le travail et une pluralité d'écrans de mode de service (402) utilisés pendant la maintenance ; et
un dispositif de commande (6) configuré pour commander l'affichage du dispositif d'affichage (4),
**caractérisé en ce que**
le dispositif de commande (6) est en outre configuré pour stocker :
des premières données d'image à afficher sur la pluralité d'écrans de mode de travail (401, 401A, 401B) ; et
des secondes données d'image à afficher sur la pluralité d'écrans de mode de service (402), et
les secondes données d'image incluent des données d'image spécifiques (X1) ayant une qualité définie pour être différente d'une qualité des premières données d'image.

2. Engin de chantier (1) selon la revendication 1, dans lequel
une qualité des données d'image spécifiques (X1) est définie pour être inférieure à la qualité des premières données d'image.

3. Engin de chantier (1) selon la revendication 1, dans lequel
les secondes données d'image incluent des données d'image communes (X2) à afficher sur au moins l'un quelconque de la pluralité d'écrans de mode de travail (401, 401A, 401B), et
une qualité des données d'image communes (X2) est définie pour être la même que la qualité des premières données d'image.

4. Engin de chantier (1) selon la revendication 1, dans lequel
la pluralité d'écrans de mode de travail (401, 401A, 401B) inclut :
un premier écran de mode de travail (401A) ; et
un second écran de mode de travail (401B) qui est moins fréquemment utilisé que le premier écran de mode de travail (401A), et
une qualité des premières données d'image à afficher sur le second écran de mode de travail (401B) est définie pour être inférieure à la qualité des premières données d'image à afficher sur le premier écran de mode de travail (401A).
